# EUROPEAN PATENT APPLICATION

(11) **EP 2 213 401 A1**
(43) Date of publication of application: **04.08.2010**
(21) Application number: 10151242.4
(22) Date of filing: 20.01.2010
(51) Int. Cl.: B23K 9/04, B23K 9/09, B23K 9/23, B23K 10/00, B23K 10/02, B23K 15/00, B23K 26/32, B23K 26/34, B23K 26/06

(54) **Method of deposition of materials with low ductility using solid free-form fabrication and adjustment of energy beam to provide a controlled cooling of the molten feedstock**

(30) Priority: 30.01.2009 US 362722
(71) Applicant: Honeywell International Inc., Morristown, NJ 07962 (US)
(72) Inventor: Adams, Robbie Joseph, Morristown, NJ 07962-2245 (US)
(74) Representative: Buckley, Guy Julian

(57) **Abstract**

A solid free-form (SFF) method is used to manufacture a component from successive layers of feedstock material (160) with low ductility. A plasma stream is created by energizing a flowing gas using an arc electrode (150), the arc electrode (150) having a variable magnitude current supplied thereto. The plasma stream is directed to a predetermined targeted region to preheat the predetermined targeted region prior to deposition. The current is adjusted and the feedstock material (160) is introduced into the plasma stream to deposit molten feedstock in the predetermined targeted region. The current is adjusted and the molten feedstock is slowly cooled at an elevated temperature, typically above the brittle to ductile transition temperature of the feedstock material (160), in a cooling phase to minimize the occurrence of material stresses.

## Description

### TECHNICAL FIELD

The present invention relates to the fabrication of parts and devices from materials having low ductility, and more particularly relates to solid free-form fabrication processes that create parts and devices from materials having low ductility by selectively applying feedstock material to a substrate or an in-process workpiece.

### BACKGROUND

Materials having low ductility are brittle at room temperature, sometimes severely so with elongations of less than 1%. Materials included in this class have a high brittle to ductile transition temperature. Metals having these properties include pure metals, such as tungsten and molybdenum, and their alloys and other alloys such as cast irons, intermetallic compounds, ceramics and plastics. Fabrication using these low ductile, or brittle, materials can be very difficult as the low ductility can result in fabrication stresses in the material that may result in fractures. In conventional fabrication methods such as castings, thermal gradients may occur during cooling of the material and result in stress gradients that are sometimes severe. Likewise, when machining these materials fractures can occur due to induced strains that exceed the maximum, but low, elongations. Additional fabrication methods for these types of materials may include additive deposition processes, such as solid free-form fabrication (SFF).

Solid free-form fabrication is a designation for a group of processes that produce three dimensional shapes from additive formation steps. SFF does not implement any part-specific tooling. When fabricating using typical solid free-form fabrication (SFF) processes, similar to additive manufacturing, significant thermal gradients are induced and stress gradients result which can induce fracture in materials, such as materials with low ductility. In effect, SFF processes may result in more severe thermal and stress gradients than conventional processes due to the inherent high thermal gradient required in SFF processes since a local spot is at its melting point and the same part at some distant area may be at a much lower temperature perhaps even at room temperature.

Generally speaking, a component may be manufactured using SFF by successively building feedstock layers representing successive cross-sectional component slices. Although there are numerous SFF systems that use different components and feedstock materials to build a component, SFF systems can be broadly described as having an automated platform/positioner for receiving and supporting the feedstock layers during the manufacturing process, a feedstock supplying apparatus that directs the feedstock material to a predetermined region to build the feedstock layers, and an energy source directed toward the predetermined region. The energy from the energy source modifies the feedstock in a layer-by-layer fashion in the predetermined region to thereby manufacture the component as the successive layers are built onto each other.

One recent implementation of SFF is generally referred to as ion fusion formation (IFF). With IFF, a torch such as a plasma, gas tungsten arc, plasma arc welding, or other torch with a variable orifice is incorporated in conjunction with a stock feeding mechanism to direct molten feedstock to a targeted surface such as a base substrate or an in-process structure of previously-deposited feedstock. A component is built using IFF by applying small amounts of molten material only where needed in a plurality of deposition steps, resulting in net-shape or near-net-shape parts without the use of machining, molds, or mandrels. The deposition steps are typically performed in a layer-by-layer fashion wherein slices are taken through a three dimensional electronic model by a computer program. A positioner then directs the molten feedstock across each layer at a prescribed thickness. IFF enables fabrication of nearly any net shape using metals, ceramics, or plastics as feedstock.

One inherent challenge when building a component using materials with low ductility, such as those previously identified, and SFF processes is in minimizing the occurrence of thermal gradients and resulting stress gradients that often lead to fractures. In many instances, materials with low ductility may be less brittle and even ductile, at elevated temperatures.

Hence, there is a need for an improved SFF process that provides for the fabrication of components from materials with low ductility. There exist a need for an SFF process that includes a technique for controlling the temperature of the deposition above the brittle to ductile transition temperature and maintaining it throughout the deposition process when building a component. There is a further need for a technique that that can be implemented without adding major components to existing SFF systems.

### BRIEF SUMMARY

The present invention provides a solid free form fabrication method for manufacturing a component from successive layers of feedstock material with low ductility, with each of the successive layers representing a cross-sectional component slice.

In one embodiment, and by way of example only the method includes the steps of: (a) providing an energy beam configured to emit at least one of a variable magnitude energy beam or a constant magnitude energy beam; (b) preheating a substrate onto which the successive layers of feedstock material with low ductility will be deposited by directing the energy beam to a predetermined targeted region; (c) introducing the feedstock material with low ductility into the energy beam to produce a pool of molten feedstock in the predetermined targeted region; and (d) adjusting the energy beam to provide a cool down phase where the pool of molten feedstock solidifies at a predetermined elevated temperature that minimizes the occurrence of material stresses.

In another exemplary embodiment, and by way of example only the present invention also provides a solid free form fabrication method for manufacturing a component from successive layers of feedstock material with low ductility, with each of the successive layers representing a cross-sectional component slice, the method including the steps of: (a) creating a plasma stream by energizing a flowing gas using an arc electrode, the arc electrode having a variable magnitude current supplied thereto; (b) preheating a substrate onto which the successive layers of feedstock material with low ductility will be deposited by providing a first current amperage and directing the plasma stream to a predetermined targeted region; (c) adjusting the variable magnitude current supplied to the arc electrode by providing an increase in current amperage toward a second current amperage and directing the plasma stream to the predetermined targeted region; (d) introducing the feedstock material with low ductility into the plasma stream to produce a pool of molten feedstock in the predetermined targeted region; and (e) adjusting the variable magnitude current supplied to the arc electrode by providing a decrease in current amperage toward the first current amperage, thus providing a cool down phase where the pool of molten feedstock solidifies at a predetermined elevated temperature that minimizes the occurrence of material stresses.

In another exemplary embodiment, and by way of example only the present invention also provide an ion fusion formation method for manufacturing a component from successive layers of a feedstock material with low ductility, with each of the successive layers representing a cross-sectional component slice, the method including the steps of: (a) creating a plasma stream by energizing a flowing gas using an arc electrode; (b) preheating a predetermined targeted region by providing a first current amperage to the arc electrode and directing the plasma stream to the predetermined targeted region; (c) determining optimal molten feedstock parameters for producing the successive layers of feedstock material with low ductility, wherein the optimal molten feedstock parameters include a feedstock deposition temperature above a brittle to ductile transition temperature of the feedstock material; (d) adjusting the optimal molten feedstock parameters by which the feedstock material will be introduced into the plasma stream by providing an increase in the first current amperage toward a second current amperage in view of the optimal molten feedstock parameters; (e) introducing the feedstock material into the plasma stream to produce a pool of molten feedstock in the predetermined targeted region; and (f) cooling the molten feedstock under controlled conditions by providing a decrease in current amperage toward the first current amperage, thus providing a cool down phase where an optimal temperature of the pool of molten feedstock is reduced to a temperature above the brittle to ductile transition temperature of the feedstock material with low ductility and solidified.

Other independent features and advantages of the preferred apparatus and method will become apparent from the following detailed description, taken in conjunction with the accompanying drawings which illustrate, by way of example, the principles of the invention.

### BRIEF DESCRIPTION OF THE DRAWINGS

FIG. 1 is a perspective view of an SFF system, and more particularly an IFF system, according to an embodiment of the invention;

FIG. 2 is a cross-sectional view of a torch from an IFF system, the torch functioning in cooperation with a wire feed mechanism, which is depicted in a perspective view; and

FIG. 3 is a graph that depicts a variable magnitude current and correlates the current with feedstock phases when the feedstock is melted using a torch that is powered at varying voltages.

### DETAILED DESCRIPTION

The following detailed description of the invention is merely exemplary in nature and is not intended to limit the invention or the application and uses of the invention. Furthermore, there is no intention to be bound by any theory presented in the preceding background of the invention or the following

### detailed description of the invention.

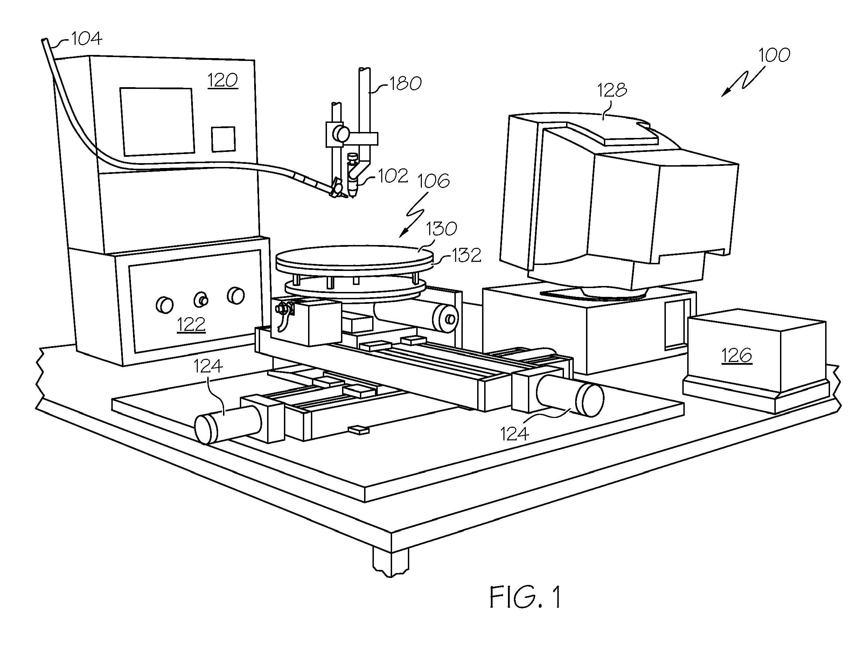

FIG. 1 is a perspective view of a SFF system, and more particularly an IFF system 100, which includes a heating torch 102 that functions in cooperation with a wire feed mechanism 104 and a positioning system 106 to build up a workpiece in a continuous or layer-by-layer manner. The positioning system 106 continuously positions and repositions the workpiece in a manner whereby feedstock material may be added to it through the wire feed mechanism 104 at predetermined deposition points. Further, the positioning system 106 may also be configured to coordinate movement and control of the torch 102 and the wire feed mechanism 104 together with the workpiece to fabricate three-dimensional articles in a predictable, highly selectable, and useful manner. Control of the positioning system 106 may be achieved by computer-implemented control software or the like. The coordinated torch 102, wire feed mechanism 104, and positioning system 106 provide a highly flexible, manually adaptable, and spontaneously constructible automated system through which components may be fabricated to net or near-net shape.

Additional elements depicted in FIG. 1 include a gas controller 120 that controls gas and/or fluid flow to the torch 102, which is preferably a plasma welding torch. A plasma or arc power source 122 supplies the necessary power to the torch 102. Positioners and/or positioning motors 124 are supplied with positioning signals from an electric drive 126 that is coupled to a computer 128 or other controlling device.

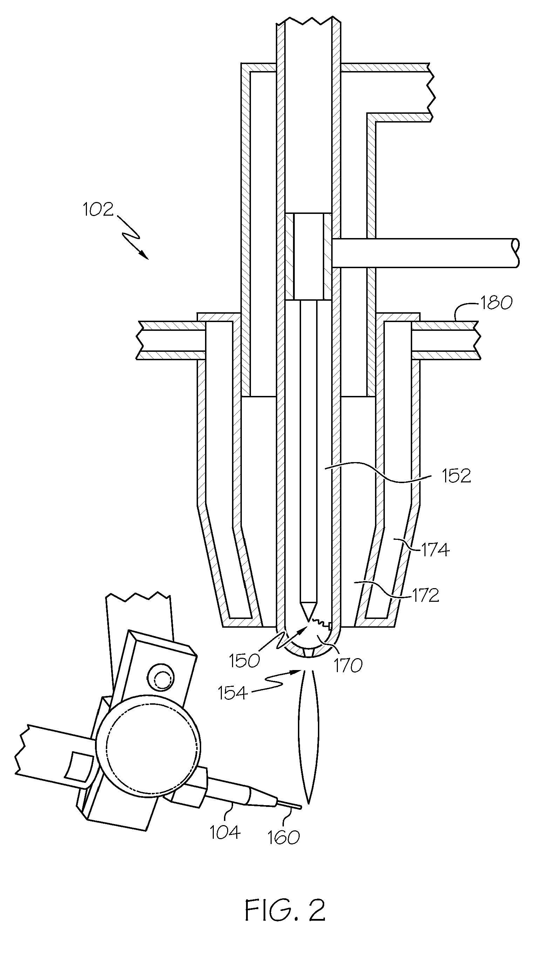

A cross-sectional view of the torch 102 is depicted in detail in FIG. 2 in cooperation with a wire feed mechanism 104. An arc electrode 150 is positioned near a nozzle 154 and inside a gas flow channel 152, and operates to ionize a gas and create a hot argon plasma in region 170 before the gas exits the nozzle 154. Upon being energized, the argon gas rapidly accelerates from the nozzle 154 toward the workpiece. The wire feed mechanism 104 introduces feedstock 160 between the nozzle 154 and the workpiece. In an exemplary embodiment, the workpiece is included in an electrical circuit including the ionized gas in order to accelerate and attract the ions from the nozzle 154. The workpiece may be charged by applying a voltage that is opposite of the charge generally present in the ionized plasma gas. The ionized gas is then electrically attracted to the workpiece. Use of such electrical charge in the workpiece may also serve to control the direction and distribution of the ionized plasma gas. The degree of attraction between the ions and the workpiece may be controlled by increasing or decreasing the charge present on the workpiece.

A noble gas such as argon is preferably ionized using the arc electrode 150, although alternative inert gases, ions, molecules, or atoms may be used in conjunction with the torch 102 instead of argon. These alternative mediators of the plasma energy may include positive and/or negative ions, or electrons alone or together with ions. Further, reactive elements may be combined with an inert gas such as argon to optimize performance of the torch 102. The plasma generating process so energizes the argon gas that the gas temperature is raised to between 5,000 and 30,000K. Consequently, only a small volume of energized argon gas is required to melt feedstock 160 from the wire feed mechanism 104. Nozzles of varying apertures or other orifices may be used to provide specific geometry and plasma collimation for the fabrication of different components. Direct beam nozzle orifices may contrast with nozzles having a fan shape or other shapes.

The ionized argon plasma, and all other ionized noble gases, has strong affinity for electrons and will obtain them from the surrounding atmosphere unless the atmosphere consists of gases having equal or higher electron affinity. One advantage of the exemplary IFF system depicted in the drawings does not require a pressurization chamber or other chamber in which the ambient gas is controlled. However, to prevent the ionized argon plasma from obtaining electrons and/or ions from the surrounding atmosphere, i.e. from nitrogen and oxygen typically present in ambient environments, the ionized argon plasma is sheathed or protected by a curtain of helium, another noble gas, or other inert gases flowing from the nozzle from a coaxial channel 172. Helium and other noble gases hold their electrons with a high degree of affinity, and are less susceptible than oxygen or nitrogen to having its electrons taken by the ionized argon plasma.

Collisions between the energetic argon atom and the nozzle 154 may substantially heat and damage the nozzle if left unchecked. To cool the nozzle 154, water or another cooling fluid is circulated in a cooling chamber 174 that surrounds the nozzle 154. A gas and water flow line 180 leads into the cooling chamber 174.

In this particular embodiment, any material with low ductility and susceptible to melting by an argon ion or other plasma beam may be supplied using a powder feed mechanism or the wire feed mechanism 104 as feedstock 160. Such materials may include metals, such as tungsten and molybdenum, and their alloys and other alloys such as cast irons, intermetallic compounds, ceramics and plastic, although numerous other materials with low ductility are anticipated as being used as feedstock depending on the desired material characteristics such as fatigue initiation, crack propagation, post-welding toughness and strength, and corrosion resistance at both welding temperatures and those temperatures at which the component will be used. Specific operating parameters including plasma temperatures, build materials, melt pool parameters, nozzle angles and tip configurations, inert shielding gases, dopants, and nozzle coolants may be tailored to fit an IFF process. U.S. Patent No. 6,680,456 discloses an IFF system and various operating parameters, and is hereby incorporated herein by reference.

As previously discussed, one inherent challenge when building a component using materials with low ductility and SFF processes is establishing and maintaining thermal management, including preheating of a predetermined deposition region, maintenance of a high temperature during the deposition process, and slow cool down of the deposited material due to the low ductility properties. In addition, thermal management must be established and maintained between the weld pool, the torch, and the substrate. An IFF process may only enable the fabrication of a component from materials with low ductility if the temperature of the material is maintained and precisely controlled above the brittle to ductile transition temperature during deposition with a controlled slow cool down to follow. During the process, the torch may be used to preheat the deposition area, next the torch melts the feedstock to a temperature above the brittle to ductile transition temperature of the materials being deposited, which forms a pool of molten feedstock on the underlying component material, if any is present. The torch may also melt a small portion of the substrate to further form a molten pool. Alternatively, the feedstock introduced into the plasma stream is sufficiently hot when in a molten state to quickly melt a small amount of underlying component material, if any is present. The molten feedstock material in the molten pool is maintained at a temperature above the brittle to ductile transition temperature during the deposition process. The temperature of the deposited feedstock material is slowly allowed to cool by precisely managing thermal heat flow out of the deposition, thereby minimizing the formation of stresses and possibility of resultant fractures. This slow cool down of the deposited feedstock material provides additional built-up structure when solidified.

There are several exemplary elements of a SFF process, and more particularly an IFF process when using materials having low ductility that may be manipulated to enable precise thermal management of the deposition environment, the feedstock during deposition, subsequent cool down phase, and the resultant component. In an exemplary method, a variable magnitude current and/or voltage, and other electrical parameters are controlled to preheat the deposition environment, including a substrate onto which the material may be deposited, produce a feedstock stream that is maintained above the brittle to ductile transition temperature and provide for decreasing thermal variables providing a controlled cool down of the deposited material. Returning briefly to FIG. 2, a current is supplied to the arc electrode 150 to create a hot plasma stream that upon being energized rapidly accelerates from the nozzle 154. According to one embodiment, a variable magnitude current or a variable magnitude voltage will cause the arc electrode to create a variable output of hot plasma in a hot plasma stream.

The wire feed mechanism 104 introduces the feedstock 160 into the plasma stream, and the varying hot plasma stream produces drops of molten feedstock above the brittle to ductile transition temperature that are sized and heated to solidify in a predetermined amount of time during a controlled cool down period in which the plasma stream may apply decreasing amounts of heat allowing the temperature of the deposited material to slowly progress below the brittle to ductile transition temperature. In an exemplary embodiment, droplets are sized and heated above the brittle to ductile transition temperature to have sufficient surface tension to practically maintain a ball shape upon impact with the substrate so that they an build on the substrate while material stresses are minimized during a slow heat outflow, or cool down process. Alternatively, the hot plasma may be sufficiently hot so that it not only remains above the brittle to ductile transition temperature, but produces a stream of molten feedstock, via plasma bursts or the like, instead of separate drops, that solidify in a predetermined cool down period to minimize material stresses.

The variable magnitude current may be manipulated in numerous exemplary ways to produce a tailored plasma stream, depending on predetermined factors including an optimal molten feedstock temperature to maintain the temperature above the brittle to ductile transition temperature, an optimal feedstock stream rate at which a predetermined amount of molten feedstock material is produced when introducing the feedstock material into the plasma stream, an optimal feedstock droplet size, and an optimal pool size for the pool of molten feedstock, and an optimal feedstock temperature during a cool down phase. Some ways to adjust the variable magnitude current include adjusting the voltage and/or amperage magnitudes, adjusting the amplitude duration within a cycle, and adjusting the current frequency. In addition, the cool down step, or heat flow out of the deposition may be controlled by reduction of the beam density and/or inclusion of a heat barrier (discussed presently).

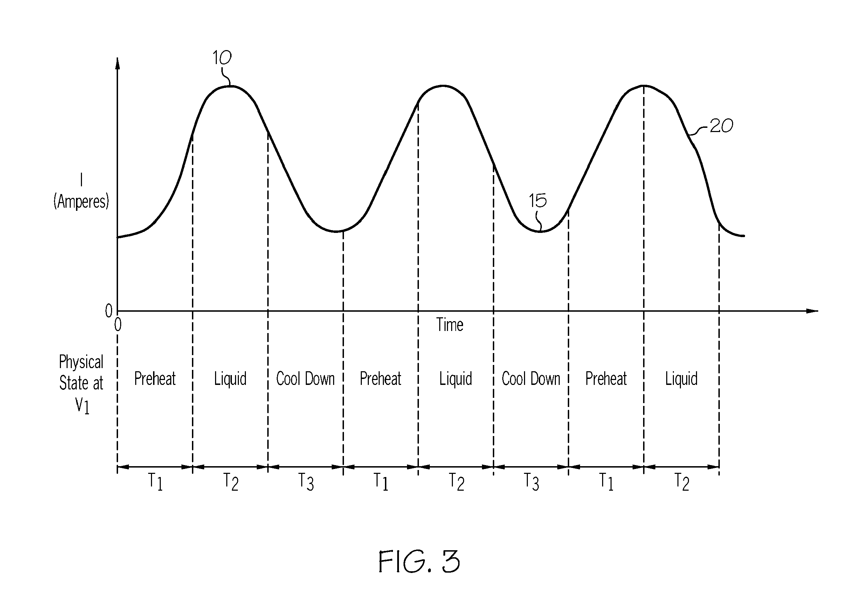

FIG. 3 is a graph that depicts an exemplary variable magnitude current and correlates the current with feedstock phases, namely, when the substrate onto which the feedstock will be deposited is preheated, when the feedstock is melted, and when the material is slowly cooled at an elevated temperature, using a torch 102 that is powered by a variable magnitude current produced from varying voltages according to exemplary methods. It should be understood that although an exemplary variable magnitude current produced by an arc electrode is described herein with reference to FIG. 3, anticipated by this disclosure are alternate energy beam sources configured to emit a constant amplitude energy beam and/or a variable amplitude energy beam, such as those capable of emitting a laser beam, an electron beam, a focused microwave beam, or the like.

Referring again to FIG. 3, the exemplary current 20 corresponds with a voltage V₁ having a sinusoidal profile, although other wave shapes may be provided, and that alternates between high amperage 10 and low amperage 15. Below the current graph is a time continuum 30 that correlates the exemplary current with a feedstock phase during an IFF process. The feedstock may be any material having low ductile properties, including metals, such as tungsten and molybdenum, and their alloys and other alloys such as cast irons, intermetallic compounds, ceramics and plastic, or any other material having low ductile properties suitable for deposition by IFF. In one particular embodiment employing an alloy material as the feedstock material, material components may be provided as a pre-alloyed material. In another embodiment employing an alloy material as the feedstock material, separate material components may be provided and mechanically mixed prior to being fed to the heat source and as such may be described as alloyed in situ. As illustrated, a preheating stage is incurred prior to deposition of the feedstock material. The preheating stage begins as the current 20 is increased from the low amperage 15 toward the high amperage 10. The preheating stage provides preheating of the substrate onto which the feedstock will be deposited. During preheating, as best illustrated in FIG. 3 as duration T₁, the current 20 is reduced from what it will be at the high amperage 10. In addition, during the preheating phase, the beam density of the torch 102 may be reduced by enlarging the contact area of the beam through defocusing of the beam, such as by enlarging the orifice in the torch 102. Approaching, at, or shortly after the current 20 is supplied at high amperage 10, as best illustrated in FIG. 3 as duration T₂, the feedstock material begins to melt to a liquid phase and is deposited onto the substrate, which may include previously-deposited material. The temperature at high amperage 10 is above the brittle to ductile transition temperature of the feedstock to minimize formation of material stresses and provide good metallurgy tie in with previous deposited layers. The feedstock continues to be deposited until or shortly after the current 20 is supplied at high amperage 10. Shortly after the current 20 is supplied at high amperage 10, the current 20 is decreased toward the low amperage 15 for the cool down phase. During the cool down phase, as best illustrated in FIG. 3 as duration T₃, not only may the current 20 be reduced, but the beam density of the torch 102 may also be reduced by enlarging the contact area of the beam through defocusing the beam, such as by enlarging the orifice in the torch 102.

In one exemplary embodiment, the duration T₂, at which the temperature is elevated and the feedstock is in a liquid phase, is only long enough to form a small feedstock droplet that is sized to solidify during a predetermined amount of time in the cool down phase. The high amperage 10 may be supplied for a duration that produces a droplet that solidifies during a cool down phase before another droplet reaches the substrate or previously-deposited material. Alternatively, the high amperage may be supplied for a duration that produces a droplet into or adjacent to a molten pool produced by the previous droplet. In another embodiment, the duration T₂ at which the feedstock is in a liquid phase is sufficiently long to provide a stream of melted feedstock prior to the cool down phase, T₃. For any of these embodiments, the pool of molten feedstock produced by the droplets or stream is allowed to solidify slowly during the cool down phase at the elevated temperature to minimize material stresses before the pool has time to flow to an extent at which successive component layers can not be formed. In a preferred embodiment, the elevated temperature is near, or above the brittle to ductile transition temperature of the feedstock material so as to provide thermal management and minimize the occurrence of thermal stresses.

As previously discussed, in addition to adjusting the voltage there are other exemplary methods for manipulating a variable magnitude current to control thermal gradients and create conditions for deposition of a material having low ductility as well as provide thermal conditions required to permit a slow cool down period to minimize material stresses. For example, the feedstock feed rate may be adjusted to introduce smaller or larger amounts of feedstock into a hot plasma stream during the deposition stage. Larger amounts of feedstock will create a relatively large droplets and stream rates, translating to a large melt pool that may take a relatively long duration to slowly cool and solidify. Further, the feedstock feed rate may be pulsed between fast and slow rates, or even stopped and started, to introduce the feedstock into the plasma stream in a pulsed manner. The pulsed feedstock feed rate may even be performed in concert with varying amplitudes in the variable magnitude current.

During deposition of the material with low ductility, higher and more uniform deposition temperatures away from the energy beam, or torch 102, may be enabled by reducing the heat flow out of the deposition. More specifically, as an example, the heat flow out of the deposited feedstock material may be controlled through the inclusion of a heat barrier 132 (FIG. 1) positioned between the substrate and the material being deposited. The heat barrier 132 is preferably formed of a non-conductive material. In an IFF system, such as that illustrated in FIG. 1, where the workpiece is part of an electrical circuit, an auxiliary conducting path is required. In a preferred embodiment, the heat barrier 132 may be formed as a discontinuous heat barrier that includes non-conducting weaved fibers.

As previously discussed, these and other adjustments to the IFF process for depositing materials with low ductility, such as, but not limited to, reduction in the velocity of the energy beam emitted from the torch 102, may be performed based on determinations pertaining to a specific desirable molten feedstock temperature so as to take into consideration the brittle to ductile transition temperature of the feedstock material, a desirable molten feedstock pool size, or a desirable feedstock stream rate and/or droplet size, and a desirable molten feedstock cool down phase.

Thus, the SFF, and more particularly, the IFF methods of the present invention include various mechanisms for improving temperature control for the molten feedstock material with low ductility and/or underlying molten component material when heated feedstock is deposited onto a targeted surface to build the component and minimize the occurrence of material stresses and resultant fractures. The methods can be implemented without adding major hardware components to existing IFF systems.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A solid free form fabrication method for manufacturing a component from successive layers of feedstock material (160) with low ductility, with each of the successive layers representing a cross-sectional component slice, the method comprising:
providing an energy beam configured to emit at least one of a variable magnitude energy beam or a constant magnitude energy beam;
preheating a substrate onto which the successive layers of feedstock material (160) with low ductility will be deposited by directing the energy beam to a predetermined targeted region;
introducing the feedstock material (160) with low ductility into the energy beam to produce a pool of molten feedstock in the predetermined targeted region; and
adjusting the energy beam to provide a cool down phase where the pool of molten feedstock solidifies at a predetermined elevated temperature that minimizes the occurrence of material stresses.

2. A method as claimed in Claim 1, wherein the energy beam is one of a laser beam, an electron beam, an arc electrode, and a focused microwave beam.

3. A method as claimed in Claim 1, wherein the elevated temp is above a brittle to ductile transition temperature of the feedstock material (160) with low ductility.

4. A method as claimed in Claim 1, further comprising:
adjusting a rate at which the feedstock material (160) with low ductility is introduced into the energy beam to bring the feedstock material (160) with low ductility to an optimal temperature.

5. A method as claimed in Claim1, further comprising:
adjusting a beam density of the energy beam to bring the feedstock material (160) with low ductility to the optimal temperature.

6. A method as claimed in Claim 1, further comprising:
adjusting a beam density of the energy beam to cool the pool of molten feedstock material (160) to the predetermined elevated temperature that minimizes the occurrence of material stresses.

7. A method as claimed in Claim 6, further comprising:
adjusting a rate at which the feedstock material (160) is introduced into the energy beam to produce an optimal feedstock stream rate.

8. A method as claimed in Claim 1, further comprising:
determining an optimal cool down phase for the molten feedstock; and
adjusting the energy beam to produce the optimal cool down phase.

9. A method as claimed in Claim 1, further comprising:
adjusting velocity between a point at which the feedstock material (160) is introduced into the energy beam and the predetermined targeted region to produce an optimal pool size.
